# EUROPEAN PATENT SPECIFICATION

(11) **EP 2 835 509 B1**
(45) Date of publication and mention of the grant of the patent: **20.07.2016**
(21) Application number: 14172202.5
(22) Date of filing: 12.06.2014
(51) Int. Cl.: F01N 3/08

(54) **Exhaust purification control method for internal combustion engine**
Abgasreinigungssystem für einen Verbrennungsmotor
Système de purification de gaz d'échappement d'un moteur à combustion interne

(30) Priority: 08.08.2013 JP 2013165422
(43) Date of publication of application: 11.02.2015
(73) Proprietor: TOYOTA JIDOSHA KABUSHIKI KAISHA, Toyota-shi, Aichi-ken, 471-8571 (JP)
(72) Inventor: Haba, Yuki, Toyota-shi, Aichi-ken, 471-8571 (JP); Yoshida, Kohei, Toyota-shi, Aichi-ken, 471-8571 (JP); Nozaki, Yusuke, Toyota-shi, Aichi-ken, 471-8571 (JP)
(74) Representative: Kuhnen & Wacker

(56) References cited:
- EP-A1- 1 793 099
- EP-A1- 2 402 572
- EP-A1- 2 460 990

## Description

### Technical Field

The present invention relates to an exhaust purification control method for an internal combustion engine.

### Background Art

Known in the art is an internal combustion engine in which an exhaust purification catalyst is arranged in an engine exhaust passage, a hydrocarbon feed valve is arranged in the engine exhaust passage upstream of the exhaust purification catalyst, a precious metal catalyst is carried on an exhaust gas flow surface of the exhaust purification catalyst, a basicity layer is formed around the precious metal catalyst, and a first NOₓ removal method which reduces NOₓ contained in an exhaust gas by a reducing intermediate which is held on the basicity layer and generated by injecting hydrocarbons from the hydrocarbon feed valve within a predetermined range of period and a second NOₓ removal method in which an air-fuel ratio of the exhaust gas flowing into the exhaust purification catalyst is made rich by a period which is longer than the above-mentioned predetermined range to release and reduce NOₓ stored in the exhaust purification catalyst when the air-fuel ratio of the exhaust gas is lean are used (for example, see JP 4868096 B).

Further methods and systems for exhaust purification in internal combustion engines are known from EP 2 402 572 A1, EP 1 793 099 A1 and EP 2 460 990 A1.

### Summary of Invention

### Technical Problem

In this internal combustion engine of JP 4868096 B, when the second NOₓ removal method is being used, a rich control for periodically making the air-fuel ratio of the exhaust gas flowing into the exhaust purification catalyst rich is performed to make the NOx stored in the exhaust purification catalyst be released from the exhaust purification catalyst and reduced. Further, in this internal combustion engine, if the NO_{X} removal method is switched from the second NOₓ removal method to the first NOₓ removal method in the state where a large amount of NOₓ is stored in the exhaust purification catalyst, when the first NO_{X} removal method is started, a large amount of NO_{X} ends up being released from the exhaust purification catalyst without being reduced. Therefore, in this internal combustion engine, when the NOₓ removal method is switched from the second NO_{X} removal method to the first NOₓ removal method, the rich control is performed to make the air-fuel ratio of the exhaust gas flowing into the exhaust purification catalyst rich and thereby make the NOₓ stored in the exhaust purification catalyst be released from the exhaust purification catalyst and reduced. Therefore, in this internal combustion engine, when the NO_{X} removal method is switched from the second NOₓ removal method to the first NOₓ removal method, the first NOₓ removal method is started when the rich control is ended.

In this regard, when the rich control is being performed, a large amount of reducing agent, that is, hydrocarbons, is sent into the exhaust purification catalyst. At this time, the majority of the hydrocarbons is used to consume the oxygen in the exhaust gas and to reduce the stored NO_{X}, but part of the hydrocarbons ends up depositing on the exhaust purification catalyst or slipping through the exhaust purification catalyst. Therefore, when the rich control is being performed, the hydrocarbons which slip through the exhaust purification catalyst continue flowing out from the exhaust purification catalyst. On the other hand, even when the rich control is ended, the hydrocarbons which deposited on the exhaust purification catalyst flow out from the exhaust purification catalyst, so for a while even when rich control is ended, hydrocarbons continue to be exhausted from the exhaust purification catalyst. Therefore, as explained above, if the first NO_{X} removal method is started when the rich control is ended, the hydrocarbons which are injected from the hydrocarbon feed valve are superposed on the hydrocarbons which continue to flow out from the exhaust purification catalyst, so not only does the problem arise of a large amount of hydrocarbons being exhausted from the exhaust purification catalyst, but also the problem arises of white smoke being produced.

### Solution to Problem

To solve the above-mentioned problem, according to the present invention, there is provided an exhaust purification control method for an internal combustion engine which comprises an exhaust purification catalyst arranged in an engine exhaust passage and a hydrocarbon feed valve arranged in the engine exhaust passage upstream of the exhaust purification catalyst, wherein a precious metal catalyst is carried on an exhaust gas flow surface of the exhaust purification catalyst and a basicity layer is formed around the precious metal catalyst. The exhaust purification control method comprises a first NOₓ removal method which reduces NO_{X} contained in an exhaust gas by a reducing intermediate which is held on the basicity layer and generated by injecting hydrocarbons from the hydrocarbon feed valve within a predetermined range of period and a second NO_{X} removal method in which an air-fuel ratio of the exhaust gas flowing into the exhaust purification catalyst is made rich by a period which is longer than the above-mentioned predetermined range to release and reduce NO_{X} stored in the exhaust purification catalyst when the air-fuel ratio of the exhaust gas is lean are used, characterized in that an amount of injection of hydrocarbons from the hydrocarbon feed valve is gradually increased if the first NO_{X} removal method is started when a rich control for making the air-fuel ratio of the exhaust gas flowing into the exhaust purification catalyst rich is ended.

### Advantageous Effects of Invention

In this way, if making the amount of injection of hydrocarbons from the hydrocarbon feed valve gradually increase when the rich control ends and the first NO_{X} removal method is started, it is possible to prevent the amount of hydrocarbons flowing out from the exhaust purification catalyst from excessively increasing when hydrocarbons are injected from the hydrocarbon feed valve. Therefore, it is possible to keep a large amount of hydrocarbons from being exhausted from the exhaust purification catalyst and possible to prevent the generation of white smoke.

### Brief Description of Drawings

[FIG. 1] FIG. 1 is an overall view of a compression ignition type internal combustion engine.
[FIG. 2] FIG. 2 is a view which schematically shows the surface part of a catalyst carrier.
[FIG. 3] FIG. 3 is a view for explaining an oxidation reaction at an exhaust purification catalyst.
[FIG. 4] FIG. 4 is a view which shows changes in an air-fuel ratio of exhaust gas which flows into an exhaust purification catalyst.
[FIG. 5] FIG. 5 is a view which shows an NO_{X} purification rate R1.
[FIG. 6] FIGS. 6A and 6B are views for explaining an oxidation reduction reaction in an exhaust purification catalyst.
[FIG. 7] FIGS. 7A and 7B are views for explaining an oxidation reduction reaction in an exhaust purification catalyst.
[FIG. 8] FIG. 8 is a view which shows changes in an air-fuel ratio of exhaust gas which flows into an exhaust purification catalyst.
[FIG. 9] FIG. 9 is a view which shows an NO_{X} purification rate R2.
[FIG. 10] FIG. 10 is a view which shows a relationship between a vibration period ΔT of hydrocarbon concentration and an NO_{X} purification rate R1.
[FIG. 11] FIGS. 11A and 11B are views which show maps of the injection amount of hydrocarbons etc.
[FIG. 12] FIG. 12 is a view which shows an NO_{X} release control.
[FIG. 13] FIG. 13 is a view which shows a map of an exhausted NO_{X} amount NOXA.
[FIG. 14] FIG. 14 is a view which shows a fuel injection timing.
[FIG. 15] FIG. 15 is a view which shows a map of an additional hydrocarbon feed amount WR.
[FIG. 16] FIG. 16 is a view which shows a first NO_{X} removal method and a second NO_{X} removal method.
[FIG. 17] FIG. 17 is a view which shows a first NO_{X} removal method and an SO_{X} release method.
[FIG. 18] FIG. 18 is a view which shows a change in an amount of hydrocarbons flowing out from an exhaust purification catalyst, etc.
[FIG. 19] FIG. 19 is a view which shows a change in an amount of hydrocarbons flowing out from an exhaust purification catalyst, etc.
[FIG. 20] FIG. 20 is a view which shows a change in an amount of hydrocarbons flowing out from an exhaust purification catalyst, etc.
[FIG. 21] FIG. 21 is a flow chart for performing an exhaust purification control.
[FIG. 22] FIG. 22 is a flow chart for performing a first NO_{X} removal method.

### Description of Embodiments

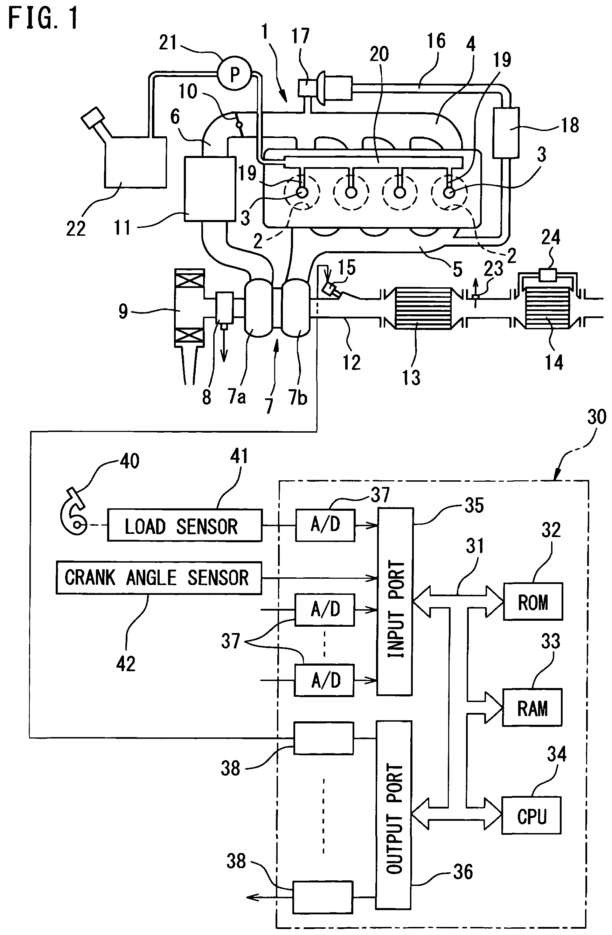

FIG. 1 is an overall view of a compression ignition type internal combustion engine.

Referring to FIG. 1, 1 indicates an engine body, 2 a combustion chamber of each cylinder, 3 an electronically controlled fuel injector for injecting fuel into each combustion chamber 2, 4 an intake manifold, and 5 an exhaust manifold. The intake manifold 4 is connected through an intake duct 6 to an outlet of a compressor 7a of an exhaust turbocharger 7, while an inlet of the compressor 7a is connected through an intake air amount detector 8 to an air cleaner 9. Inside the intake duct 6, a throttle valve 10 which is driven by an actuator is arranged. Around the intake duct 6, a cooling device 11 is arranged for cooling the intake air which flows through the inside of the intake duct 6. In the embodiment which is shown in FIG. 1, the engine cooling water is guided to the inside of the cooling device 11 where the engine cooling water is used to cool the intake air.

On the other hand, the exhaust manifold 5 is connected to an inlet of an exhaust turbine 7b of the exhaust turbocharger 7, and an outlet of the exhaust turbine 7b is connected through an exhaust pipe 12 to an inlet of an exhaust purification catalyst 13. In an embodiment of the present invention, this exhaust purification catalyst 13 is comprised of an NO_{X} storage catalyst 13. An outlet of the exhaust purification catalyst 13 is connected to a particulate filter 14 and, upstream of the exhaust purification catalyst 13 inside the exhaust pipe 12, a hydrocarbon feed valve 15 is arranged for feeding hydrocarbons comprised of diesel oil or other fuel used as fuel for a compression ignition type internal combustion engine. In the embodiment shown in FIG. 1, diesel oil is used as the hydrocarbons which are fed from the hydrocarbon feed valve 15. Note that, the present invention can also be applied to a spark ignition type internal combustion engine in which fuel is burned under a lean air-fuel ratio. In this case, from the hydrocarbon feed valve 15, hydrocarbons comprised of gasoline or other fuel used as fuel of a spark ignition type internal combustion engine are fed.

On the other hand, the exhaust manifold 5 and the intake manifold 4 are connected with each other through an exhaust gas recirculation (hereinafter referred to as an "EGR") passage 16. Inside the EGR passage 16, an electronically controlled EGR control valve 17 is arranged. Further, around the EGR passage 16, a cooling device 18 is arranged for cooling the EGR gas which flows through the inside of the EGR passage 16. In the embodiment which is shown in FIG. 1, the engine cooling water is guided to the inside of the cooling device 18 where the engine cooling water is used to cool the EGR gas. On the other hand, each fuel injector 3 is connected through a fuel feed tube 19 to a common rail 20. This common rail 20 is connected through an electronically controlled variable discharge fuel pump 21 to a fuel tank 22. The fuel which is stored inside of the fuel tank 22 is fed by the fuel pump 21 to the inside of the common rail 20. The fuel which is fed to the inside of the common rail 21 is fed through each fuel feed tube 19 to the fuel injector 3.

An electronic control unit 30 is comprised of a digital computer provided with a ROM (read only memory) 32, a RAM (random access memory) 33, a CPU (microprocessor) 34, an input port 35, and an output port 36, which are connected with each other by a bidirectional bus 31. Downstream of the exhaust purification catalyst 13, a temperature sensor 23 is arranged for detecting the temperature of the exhaust gas flowing out from the exhaust purification catalyst 13, and a pressure difference sensor 24 for detecting a pressure difference before and after the particulate filter 14 is attached to the particulate filter 14. The output signals of these temperature sensor 23, pressure difference sensor 24 and intake air amount detector 8 are input through respectively corresponding AD converters 37 to the input port 35. Further, an accelerator pedal 40 has a load sensor 41 connected to it which generates an output voltage proportional to the amount of depression L of the accelerator pedal 40. The output voltage of the load sensor 41 is input through a corresponding AD converter 37 to the input port 35. Furthermore, at the input port 35, a crank angle sensor 42 is connected which generates an output pulse every time a crankshaft rotates by, for example, 15°. On the other hand, the output port 36 is connected through corresponding drive circuits 38 to each fuel injector 3, the actuator for driving the throttle valve 10, hydrocarbon feed valve 15, EGR control valve 17, and fuel pump 21.

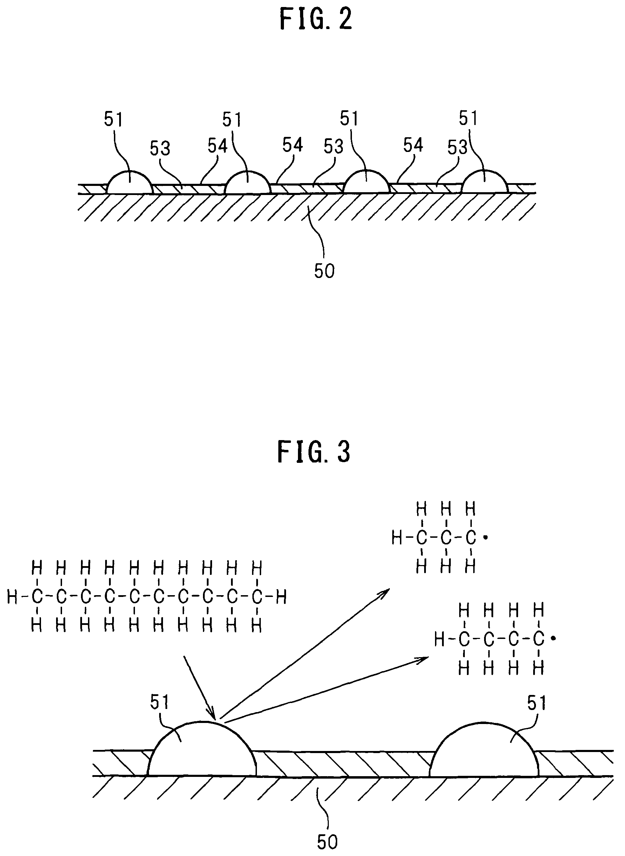

FIG. 2 schematically shows a surface part of a catalyst carrier which is carried on a substrate of the exhaust purification catalyst 13 shown in FIG. 1. At this exhaust purification catalyst 13, as shown in FIG. 2, for example, there is provided a catalyst carrier 50 made of alumina on which precious metal catalysts 51 comprised of platinum Pt are carried. Furthermore, on this catalyst carrier 50, a basic layer 53 is formed which includes at least one element selected from potassium K, sodium Na, cesium Cs, or another such alkali metal, barium Ba, calcium Ca, or another such alkali earth metal, a lanthanide or another such rare earth and silver Ag, copper Cu, iron Fe, iridium Ir, or another metal able to donate electrons to NO_{X}. In this case, on the catalyst carrier 50 of the exhaust purification catalyst 13, in addition to platinum Pt, rhodium Rh or palladium Pd may be further carried. Note that the exhaust gas flows along the top of the catalyst carrier 50, so the precious metal catalysts 51 can be said to be carried on the exhaust gas flow surfaces of the exhaust purification catalyst 13. Further, the surface of the basic layer 53 exhibits basicity, so the surface of the basic layer 53 is called the "basic exhaust gas flow surface parts 54".

If hydrocarbons are injected from the hydrocarbon feed valve 15 into the exhaust gas, the hydrocarbons are reformed by the exhaust purification catalyst 13. In the present invention, at this time, the reformed hydrocarbons are used to remove the NO_{X} at the exhaust purification catalyst 13. FIG. 3 schematically shows the reformation action performed at the exhaust purification catalyst 13 at this time. As shown in FIG. 3, the hydrocarbons HC which are injected from the hydrocarbon feed valve 15 become radical hydrocarbons HC with a small carbon number due to the precious metal catalyst 51.

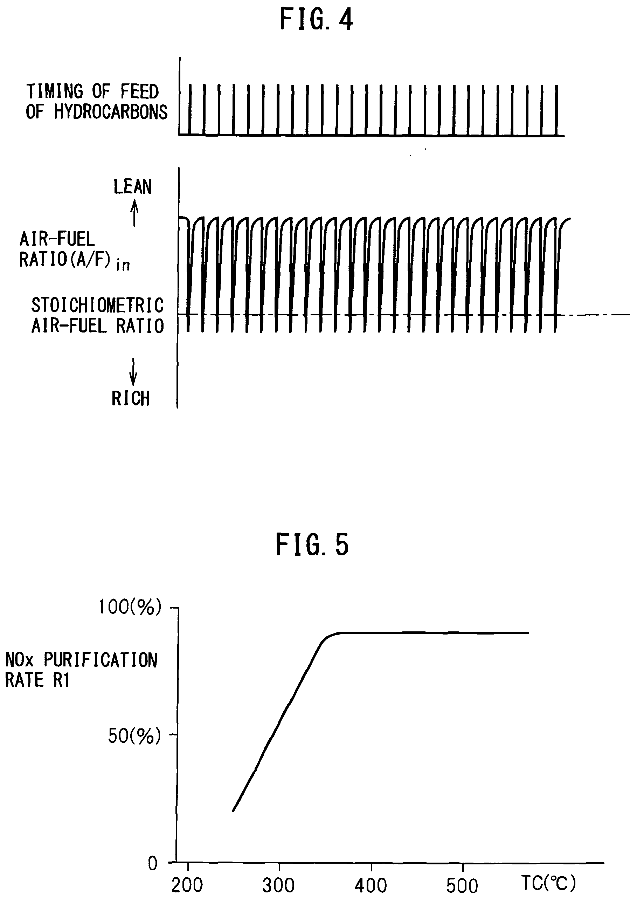

FIG. 4 shows the feed timing of hydrocarbons from the hydrocarbon feed valve 15 and the change in the air-fuel ratio (A/F)in of the exhaust gas which flows into the exhaust purification catalyst 13. Note that, the change in the air-fuel ratio (A/F)in depends on the change in concentration of the hydrocarbons in the exhaust gas which flows into the exhaust purification catalyst 13, so it can be said that the change in the air-fuel ratio (A/F)in shown in FIG. 4 expresses the change in concentration of the hydrocarbons. However, if the hydrocarbon concentration becomes higher, the air-fuel ratio (A/F)in becomes smaller, so, in FIG. 4, the more to the rich side the air-fuel ratio (A/F)in becomes, the higher the hydrocarbon concentration.

FIG. 5 shows the NO_{X} purification rate R1 by the exhaust purification catalyst 13 with respect to the catalyst temperatures TC of the exhaust purification catalyst 13 when periodically making the concentration of hydrocarbons which flow into the exhaust purification catalyst 13 change so as to, as shown in FIG. 4, periodically make the air-fuel ratio (A/F)in of the exhaust gas flowing to the exhaust purification catalyst 13 rich. In this regard, as a result of a research relating to NO_{X} purification for a long time, it is learned that if making the concentration of hydrocarbons which flow into the exhaust purification catalyst 13 vibrate by within a predetermined range of amplitude and within a predetermined range of period, as shown in FIG. 5, an extremely high NO_{X} purification rate R1 is obtained even in a 350°C or higher high temperature region.

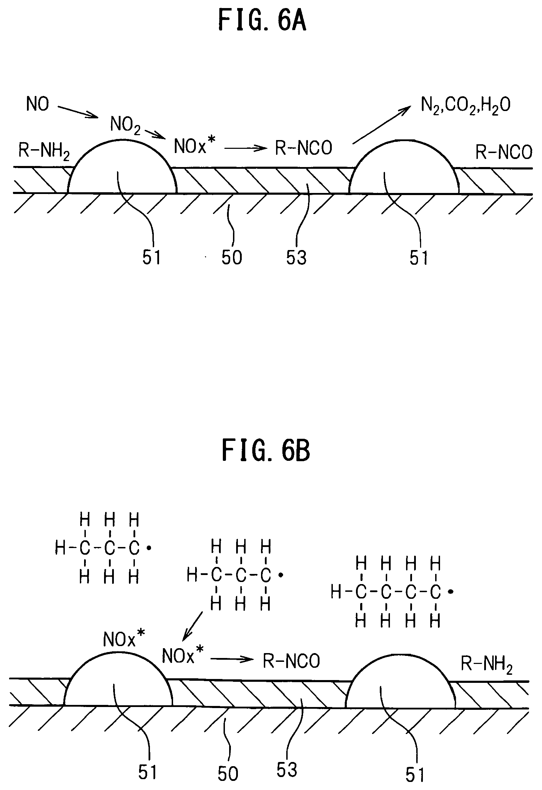

Furthermore, it is learned that at this time, a large amount of reducing intermediates which contain nitrogen and hydrocarbons continues to be held or adsorbed on the surface of the basic layer 53, that is, on the basic exhaust gas flow surface parts 54 of the exhaust purification catalyst 13, and the reducing intermediates play a central role in obtaining a high NO_{X} purification rate R1. Next, this will be explained with reference to FIGS. 6A and 6B. Note that, these FIGS. 6A and 6B schematically show the surface part of the catalyst carrier 50 of the exhaust purification catalyst 13. These FIGS. 6A and 6B show the reaction which is presumed to occur when the concentration of hydrocarbons which flow into the exhaust purification catalyst 13 is made to vibrate by within a predetermined range of amplitude and within a predetermined range of period.

FIG. 6A shows when the concentration of hydrocarbons which flow into the exhaust purification catalyst 13 is low, while FIG. 6B shows when hydrocarbons are fed from the hydrocarbon feed valve 15 and the air-fuel ratio (A/F)in of the exhaust gas flowing to the exhaust purification catalyst 13 is made rich, that is, the concentration of hydrocarbons which flow into the exhaust purification catalyst 13 becomes higher.

Now, as will be understood from FIG. 4, the air-fuel ratio of the exhaust gas which flows into the exhaust purification catalyst 13 is maintained lean except for an instant, so the exhaust gas which flows into the exhaust purification catalyst 13 normally becomes a state of oxygen excess. At this time, part of the NO which is contained in the exhaust gas deposits on the exhaust purification catalyst 13, while part of the NO which is contained in the exhaust gas, as shown in FIG. 6A, is oxidized on the platinum 51 and becomes NO₂. Next, this NO₂ is further oxidized and becomes NO₃. Further, part of the NO₂ becomes NO₂⁻. Therefore, on the platinum Pt 51, NO₂⁻ and NO₃ are produced. The NO which is deposited on the exhaust purification catalyst 13 and the NO₂⁻ and NO₃ which are formed on the platinum Pt 51 are strong in activity. Therefore, below, these NO, NO₂⁻, and NO₃ will be referred to as the "active NO_{X}*".

On the other hand, if hydrocarbons are fed from the hydrocarbon feed valve 15 and the air-fuel ratio (A/F)in of the exhaust gas flowing to the exhaust purification catalyst 13 is made rich, the hydrocarbons successively deposit over the entire exhaust purification catalyst 13. The majority of the deposited hydrocarbons successively react with oxygen and are burned. Part of the deposited hydrocarbons are successively reformed and become radicalized inside of the exhaust purification catalyst 13 as shown in FIG. 3. Therefore, as shown in FIG. 6B, the hydrogen concentration around the active NO_{X}* becomes higher. In this regard, if, after the active NO_{X}* is produced, the state of a high oxygen concentration around the active NO_{X}* continues for a constant time or more, the active NO_{X}* is oxidized and is absorbed in the form of nitrate ions NO₃⁻ inside the basic layer 53. However, if, before this constant time elapses, the hydrocarbon concentration around the active NO_{X}* becomes higher, as shown in FIG. 6B, the active NO_{X}* reacts on the platinum 51 with the radical hydrocarbons HC to thereby form the reducing intermediates. The reducing intermediates are adhered or adsorbed on the surface of the basic layer 53.

Note that, at this time, the first produced reducing intermediate is considered to be a nitro compound R-NO₂. If this nitro compound R-NO₂ is produced, the result becomes a nitrile compound R-CN, but this nitrile compound R-CN can only survive for an instant in this state, so immediately becomes an isocyanate compound R-NCO. This isocyanate compound R-NCO becomes an amine compound R-NH₂ if hydrolyzed. However, in this case, what is hydrolyzed is considered to be part of the isocyanate compound R-NCO. Therefore, as shown in FIG. 6B, the majority of the reducing intermediates which are held or adsorbed on the surface of the basic layer 53 is believed to be the isocyanate compound R-NCO and amine compound R-NH₂.

On the other hand, as shown in FIG. 6B, if the produced reducing intermediates are surrounded by the hydrocarbons HC, the reducing intermediates are blocked by the hydrocarbons HC and the reaction will not proceed any further. In this case, if the concentration of hydrocarbons which flow into the exhaust purification catalyst 13 is lowered and then the hydrocarbons which are deposited around the reducing intermediates will be oxidized and consumed, and thereby the concentration of oxygen around the reducing intermediates becomes higher, the reducing intermediates react with the NO_{X} in the exhaust gas, react with the active NO_{X}*, react with the surrounding oxygen, or break down on their own. Due to this, the reducing intermediates R-NCO and R-NH₂ are converted to N₂, CO₂, and H₂O as shown in FIG. 6A, therefore the NO_{X} is removed.

In this way, in the exhaust purification catalyst 13, when the concentration of hydrocarbons which flow into the exhaust purification catalysts 13 is made higher, reducing intermediates are produced, and after the concentration of hydrocarbons which flow into the exhaust purification catalyst 13 is lowered, when the oxygen concentration is raised, the reducing intermediates react with the NO_{X} in the exhaust gas or the active NO_{X}* or oxygen or break down on their own whereby the NO_{X} is removed. That is, in order for the exhaust purification catalyst 13 to remove the NO_{X}, the concentration of hydrocarbons which flow into the exhaust purification catalyst 13 has to be periodically changed.

Of course, in this case, it is necessary to raise the hydrocarbon concentration to a concentration sufficiently high for producing the reducing intermediates and it is necessary to lower the hydrocarbon concentration to a concentration sufficiently low for making the produced reducing intermediates react with the NO_{X} in the exhaust gas or the active NO_{X}* or oxygen or break down on their own. That is, it is necessary to make the concentration of hydrocarbons which flow into the exhaust purification catalyst 13 vibrate by within a predetermined range of amplitude. Note that, in this case, it is necessary to hold these reducing intermediates on the basic layer 53, that is, the basic exhaust gas flow surface parts 54, until the produced reducing intermediates R-NCO and R-NH₂ react with the NO_{X} in the exhaust gas or the active NO_{X}* or oxygen or break down themselves. For this reason, the basic exhaust gas flow surface parts 54 are provided.

On the other hand, if lengthening the feed period of the hydrocarbons, the time until the oxygen concentration becomes higher becomes longer in the period after the hydrocarbons are fed until the hydrocarbons are next fed. Therefore, the active NO_{X}* is absorbed in the basic layer 53 in the form of nitrates without producing reducing intermediates. To avoid this, it is necessary to make the concentration of hydrocarbons which flow into the exhaust purification catalyst 13 vibrate by within a predetermined range of period.

Therefore, in the embodiment according to the present invention, to react the NO_{X} contained in the exhaust gas and the reformed hydrocarbons and produce the reducing intermediates R-NCO and R-NH₂ containing nitrogen and hydrocarbons, the precious metal catalysts 51 are carried on the exhaust gas flow surfaces of the exhaust purification catalyst 13. To hold the produced reducing intermediates R-NCO and R-NH₂ inside the exhaust purification catalyst 13, the basic layers 53 are formed around the precious metal catalysts 51. The reducing intermediates R-NCO and R-NH₂ which are held on the basic layer 53 are converted to N₂, CO₂, and H₂O. The vibration period of the hydrocarbon concentration is made the vibration period required for continuation of the production of the reducing intermediates R-NCO and R-NH₂. Incidentally, in the example shown in FIG. 4, the injection interval is made 3 seconds.

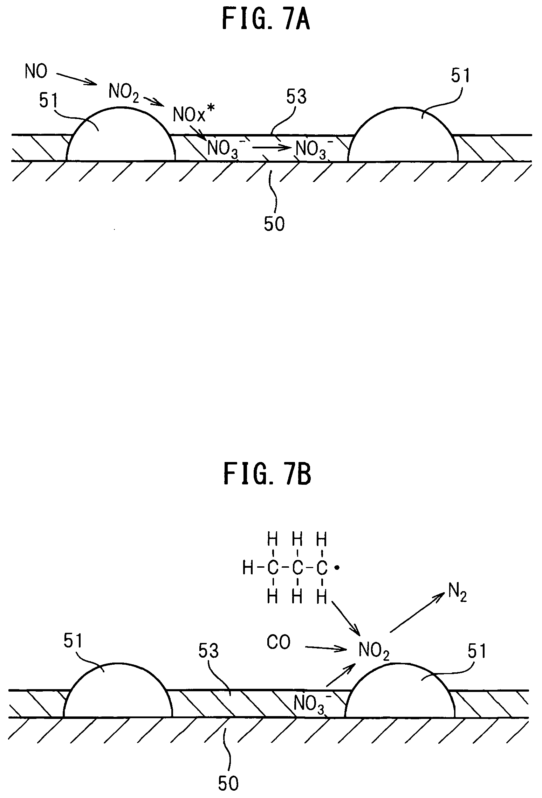

If the vibration period of the hydrocarbon concentration, that is, the injection period of hydrocarbons from the hydrocarbon feed valve 15, is made longer than the above predetermined range of period, the reducing intermediates R-NCO and R-NH₂ disappear from the surface of the basic layer 53. At this time, the active NO_{X}* which is produced on the platinum Pt 53, as shown in FIG. 7A, diffuses in the basic layer 53 in the form of nitrate ions NO₃⁻ and becomes nitrates. That is, at this time, the NO_{X} in the exhaust gas is absorbed in the form of nitrates inside of the basic layer 53.

On the other hand, FIG. 7B shows the case where the air-fuel ratio of the exhaust gas which flows into the exhaust purification catalyst 13 is made rich when the NO_{X} is absorbed in the form of nitrates inside of the basic layer 53. In this case, the oxygen concentration in the exhaust gas falls, so the reaction proceeds in the opposite direction (NO₃⁻→NO₂), and consequently the nitrates absorbed in the basic layer 53 successively become nitrate ions NO₃⁻ and, as shown in FIG. 7B, are released from the basic layer 53 in the form of NO₂. Next, the released NO₂ is reduced by the hydrocarbons HC and CO contained in the exhaust gas.

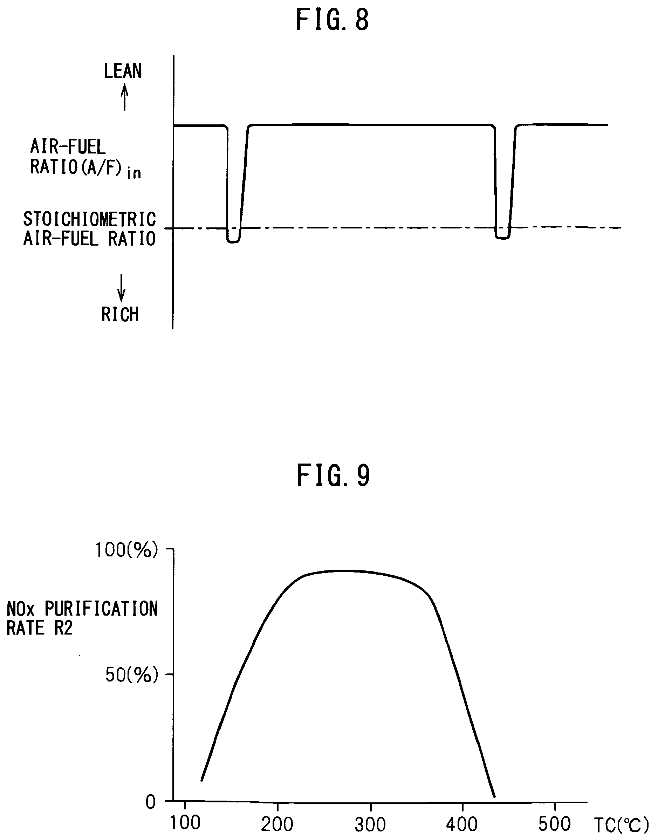

FIG. 8 shows the case of making the air-fuel ratio (A/F)in of the exhaust gas which flows into the exhaust purification catalyst 13 temporarily rich slightly before the NO_{X} absorption ability of the basic layer 53 becomes saturated. Note that, in the example shown in FIG. 8, the time interval of this rich control is 1 minute or more. In this case, the NO_{X} which was absorbed in the basic layer 53 when the air-fuel ratio (A/F)in of the exhaust gas was lean is released all at once from the basic layer 53 and reduced when the air-fuel ratio (A/F)in of the exhaust gas is made temporarily rich. Therefore, in this case, the basic layer 53 plays the role of an absorbent for temporarily absorbing NO_{X}.

Note that, at this time, sometimes the basic layer 53 temporarily adsorbs the NO_{X}. Therefore, if using term of "storage" as a term including both "absorption" and "adsorption", at this time, the basic layer 53 performs the role of an NO_{X} storage agent for temporarily storing the NO_{X}. That is, in this case, if the ratio of the air and fuel (hydrocarbons) which are supplied into the engine intake passage, combustion chambers 2, and upstream of the exhaust purification catalyst 13 in the exhaust passage is referred to as "the air-fuel ratio of the exhaust gas", the exhaust purification catalyst 13 functions as an NO_{X} storage catalyst which stores the NO_{X} when the air-fuel ratio of the exhaust gas is lean and releases the stored NO_{X} when the oxygen concentration in the exhaust gas falls.

The solid line of FIG. 9 shows the NO_{X} purification rate R2 when making the exhaust purification catalyst 13 function as an NO_{X} storage catalyst in this way. Note that, the abscissa of the FIG. 9 shows the catalyst temperature TC of the exhaust purification catalyst 13. When making the exhaust purification catalyst 13 function as an NO_{X} storage catalyst, as shown in FIG. 9, when the catalyst temperature TC is 250°C to 300°C, an extremely high NO_{X} purification rate is obtained, but when the catalyst temperature TC becomes a 350°C or higher high temperature, the NO_{X} purification rate R2 falls.

In this way, when the catalyst temperature TC becomes 350°C or more, the NO_{X} purification rate R2 falls because if the catalyst temperature TC becomes 350°C or more, NO_{X} is less easily stored and the nitrates break down by heat and are released in the form of NO₂ from the exhaust purification catalyst 13. That is, so long as storing NO_{X} in the form of nitrates, when the catalyst temperature TC is high, it is difficult to obtain a high NO_{X} purification rate R2. However, in the new NO_{X} purification method shown from FIG. 4 to FIGS. 6A and 6B, the amount of NO_{X} stored in the form of nitrates is small, and consequently, as shown in FIG. 5, even when the catalyst temperature TC is high, a high NO_{X} purification rate R1 is obtained.

In the embodiment according to the present invention, to be able to purify NO_{X} by using this new NO_{X} purification method, a hydrocarbon feed valve 15 for feeding hydrocarbons is arranged in the engine exhaust passage, an exhaust purification catalyst 13 is arranged in the engine exhaust passage downstream of the hydrocarbon feed valve 15, precious metal catalysts 51 are carried on the exhaust gas flow surfaces of the exhaust purification catalyst 13, the basic layers 53 are formed around the precious metal catalysts 51, the exhaust purification catalyst 13 has the property of reducing the NO_{X} contained in exhaust gas by the reducing intermediates which are held on the basic layers 53 if hydrocarbons are injected from the hydrocarbon feed valve 15 within a predetermined range of period and has the property of being increased in storage amount of NO_{X} contained in exhaust gas if making the injection period of the hydrocarbon from the hydrocarbon feed valve 15 longer than this predetermined range, and, at the time of engine operation, the hydrocarbons are injected from the hydrocarbon feed valve 15 within the predetermined range of period to thereby reduce the NO_{X} which is contained in the exhaust gas in the exhaust purification catalyst 13.

That is, the NO_{X} purification method which is shown from FIG. 4 to FIGS. 6A and 6B can be said to be a new NO_{X} purification method designed to remove NO_{X} without forming so much nitrates in the case of using an exhaust purification catalyst which carries precious metal catalysts and forms a basic layer which can absorb NO_{X}. In actuality, when using this new NO_{X} purification method, the nitrates which are detected from the basic layer 53 are smaller in amount compared with the case where making the exhaust purification catalyst 13 function as an NO_{X} storage catalyst. Note that, this new NO_{X} purification method will be referred to below as the "first NO_{X} removal method".

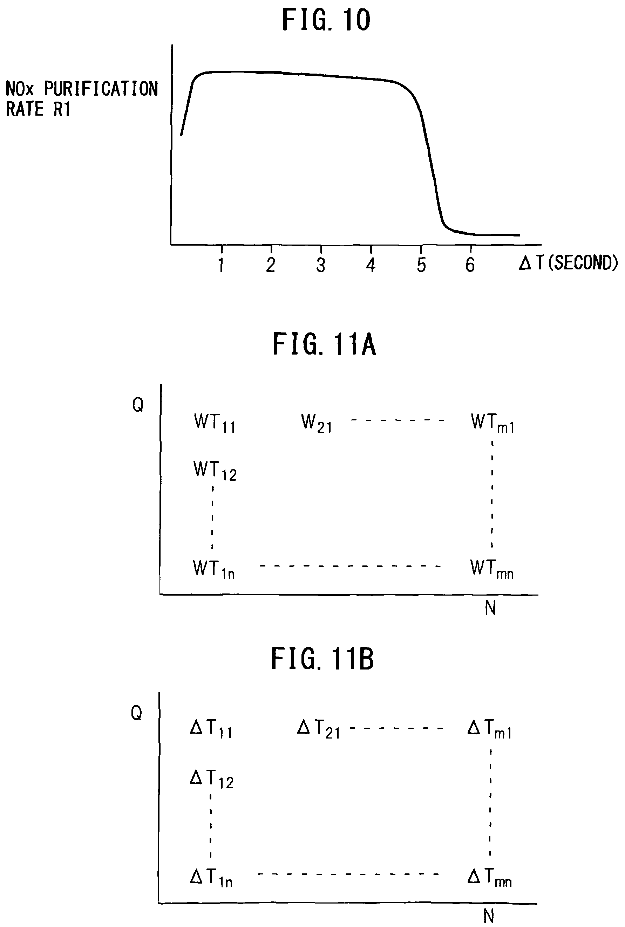

Now, as mentioned before, if the injection period ΔT of the hydrocarbons from the hydrocarbon feed valve 15 becomes longer, the time period in which the oxygen concentration around the active NO_{X}* becomes higher becomes longer in the time period after the hydrocarbons are injected to when the hydrocarbons are next injected. In this case, in the embodiment shown in FIG. 1, if the injection period ΔT of the hydrocarbons becomes longer than about 5 seconds, the active NO_{X}* starts to be absorbed in the form of nitrates inside the basic layer 53. Therefore, as shown in FIG. 10, if the vibration period ΔT of the hydrocarbon concentration becomes longer than about 5 seconds, the NO_{X} purification rate R1 falls. Therefore, the injection period ΔT of the hydrocarbons has to be made 5 seconds or less.

On the other hand, in the embodiment of the present invention, if the injection period ΔT of the hydrocarbons becomes about 0.3 second or less, the injected hydrocarbons start to build up on the exhaust gas flow surfaces of the exhaust purification catalyst 13, therefore, as shown in FIG. 10, if the injection period ΔT of the hydrocarbons becomes about 0.3 second or less, the NO_{X} purification rate R1 falls. Therefore, in the embodiment according to the present invention, the injection period of the hydrocarbons is made from 0.3 second to 5 seconds.

In the embodiment according to the present invention, the injection amount and injection timing of hydrocarbons from the hydrocarbon feed valve 15 which are optimum for ensuring a good NO_{X} purification action by the first NO_{X} removal method are obtained in advance. In this case, in the embodiment according to the present invention, the optimum hydrocarbon injection amount WT when the NO_{X} purification action by the first NO_{X} removal method is performed is stored as a function of the injection amount Q from fuel injectors 3 and the engine speed N in the form of a map such as shown in FIG. 11A in advance in the ROM 32. Further, the optimum injection period ΔT of the hydrocarbons at this time is also stored as a function of the injection amount Q from the fuel injectors 3 and the engine speed N in the form of a map such as shown in FIG. 11B in advance in the ROM 32.

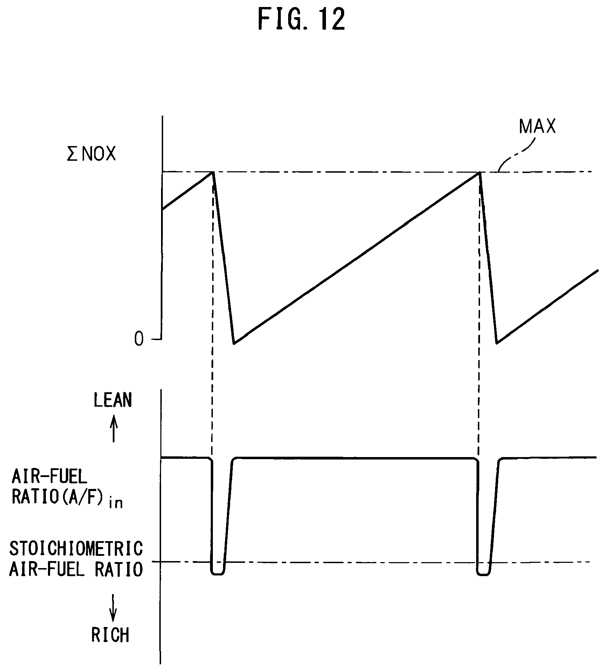

Next, referring to FIG. 12 to FIG. 15, an NO_{X} purification method when making the exhaust purification catalyst 13 function as an NO_{X} storage catalyst will be explained specifically. The NO_{X} purification method in the case of making the exhaust purification catalyst 13 function as an NO_{X} storage catalyst in this way will be referred to below as the "second NO_{X} removal method".

In this second NO_{X} removal method, as shown in FIG. 12, when the stored NO_{X} amount ∑NO_{X} of NO_{X} which is stored in the basic layer 53 exceeds a predetermined allowable amount MAX, the air-fuel ratio (A/F)in of the exhaust gas flowing into the exhaust purification catalyst 13 is temporarily made rich. If the air-fuel ratio (A/F)in of the exhaust gas is made rich, the NO_{X} which was stored in the basic layer 53 when the air-fuel ratio (A/F)in of the exhaust gas was lean is released from the basic layer 53 all at once and reduced. Due to this, the NO_{X} is removed.

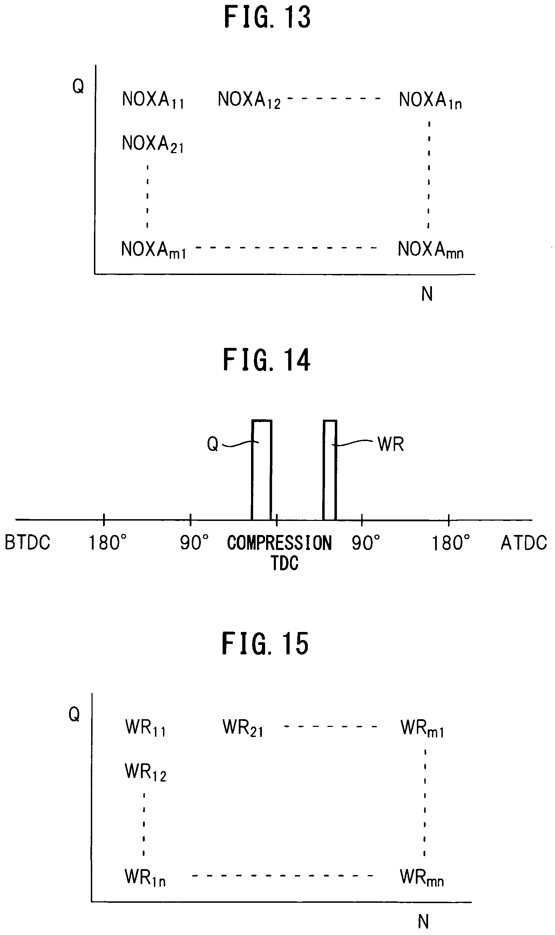

The stored NO_{X} amount ∑NO_{X} is, for example, calculated from the amount of NO_{X} which is exhausted from the engine. In this embodiment according to the present invention, the exhausted NO_{X} amount NOXA of NO_{X} which is exhausted from the engine per unit time is stored as a function of the injection amount Q and engine speed N in the form of a map such as shown in FIG. 13 in advance in the ROM 32. The stored NO_{X} amount ∑NO_{X} is calculated from this exhausted NO_{X} amount NOXA. In this case, as explained before, the period at which the air-fuel ratio (A/F)in of the exhaust gas is made rich is usually 1 minute or more.

In this second NO_{X} removal method, as shown in FIG. 14, by injecting an additional fuel WR into each combustion chamber 2 from the fuel injector 3 in addition to the combustion-use fuel Q, the air-fuel ratio (A/F)in of the exhaust gas which flows into the exhaust purification catalyst 13 is made rich. Note that, in FIG. 14, the abscissa indicates the crank angle. This additional fuel WR is injected at a timing at which it will burn, but will not appear as engine output, that is, slightly before ATDC90° after compression top dead center. This fuel amount WR is stored as a function of the injection amount Q and engine speed N in the form of a map such as shown in FIG. 15 in advance in the ROM 32. Of course, in this case, it is also possible to make the injection amount of hydrocarbons from the hydrocarbon feed valve 15 increase so as to make the air-fuel ratio (A/F)in of the exhaust gas rich.

Now then, in an embodiment according to the present invention, the first NO_{X} removal method which reduces NO_{X} contained in an exhaust gas by a reducing intermediate which is held on the basicity layer 53 and generated by injecting hydrocarbons from the hydrocarbon feed valve 15 within a predetermined range of period and a second NO_{X} removal method in which an air-fuel ratio of the exhaust gas flowing into the exhaust purification catalyst 13 is made rich by a period which is longer than the above-mentioned predetermined range to release and reduce NO_{X} stored in the exhaust purification catalyst 13 when the air-fuel ratio of the exhaust gas is lean are used. In this case, as will be understood from a comparison of the NO_{X} purification rate R1 by the first NO_{X} removal method shown in FIG. 5 and the NO_{X} purification rate R2 by the second NO_{X} removal method shown in FIG. 9, when the catalyst temperature TC is relatively low, the NO_{X} purification rate R2 by the second NO_{X} removal method becomes high, while when the catalyst temperature TC becomes higher, the NO_{X} purification rate R1 by the first NO_{X} removal method becomes high. Therefore, in an embodiment according to the present invention, generally speaking, when the catalyst temperature TC is low, the second NO_{X} removal method is used, while when the catalyst temperature TC is high, the first NO_{X} removal method is used.

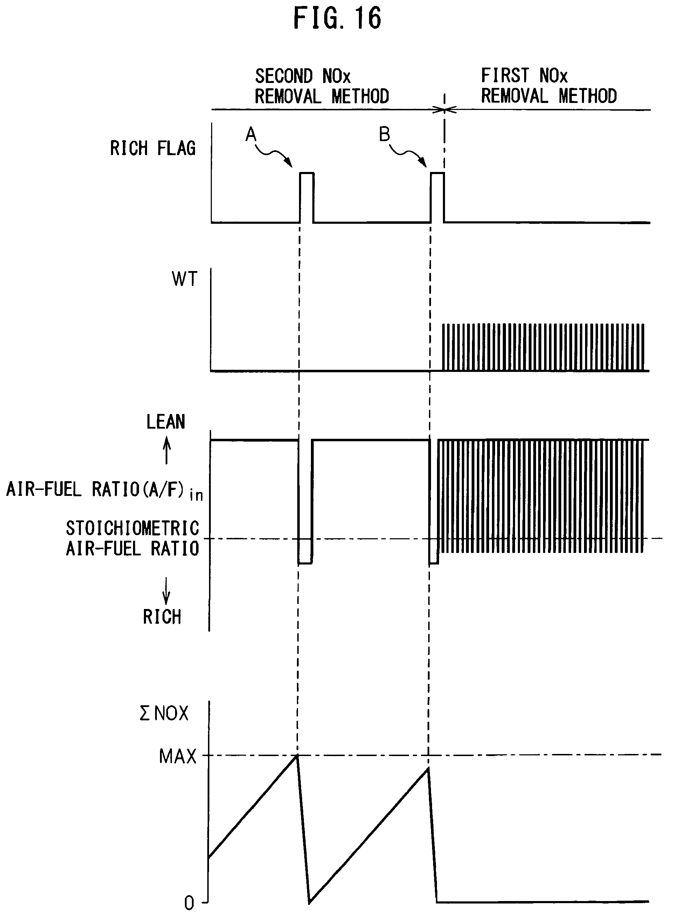

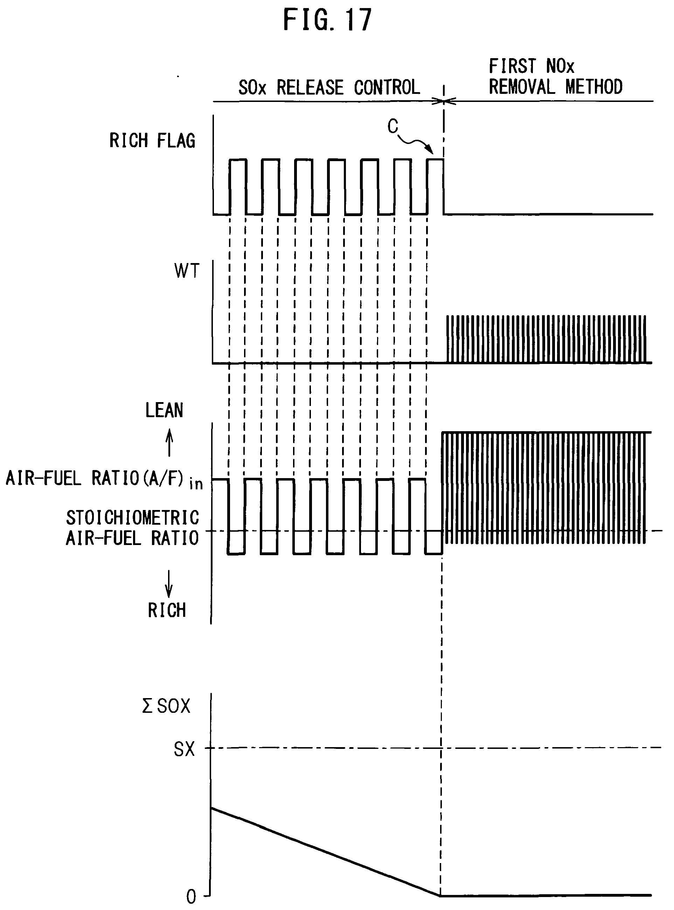

Next, referring to FIG. 16 and FIG. 17, an outline of exhaust purification control will be explained. In an embodiment according to the present invention, when the air-fuel ratio of the exhaust gas flowing into the exhaust purification catalyst 13 should be made rich, a rich flag is set. If the rich flag is set, the rich control for making the air-fuel ratio of the exhaust gas flowing into the exhaust purification catalyst 13 rich is performed by injecting the additional fuel WR into the combustion chamber 2 from the fuel injector 3 in addition to the combustion-use fuel Q as shown in FIG. 14. FIG. 16 shows the changes in the rich flag, the injection timing of the hydrocarbons WT, the changes in the air-fuel ratio (A/F)in of the exhaust gas flowing into the exhaust purification catalyst 13, and the stored NO_{X} amount ∑NOX which is stored in the exhaust purification catalyst 13 when an NO_{X} removal action is switched from the NO_{X} removal action by the second NO_{X} removal method to the NO_{X} removal action by the first NO_{X} removal method.

As shown in FIG. 16, when the second NO_{X} removal method is being performed, the rich flag is set when the stored NO_{X} amount ∑NOX which is stored in the basicity layer 53 of the exhaust purification catalyst 13 exceeds the allowable amount MAX, and the rich control is performed. Due to this, the air-fuel ratio (A/F)in of the exhaust gas flowing into the exhaust purification catalyst 13 is temporarily made rich. On the other hand, if the NO_{X} removal action is switched from the NO_{X} removal action by the second NO_{X} removal method to the NO_{X} removal action by the first NO_{X} removal method in the state where NO_{X} is stored in the exhaust purification catalyst 13, when the NO_{X} removal action by the first NO_{X} removal method is started, the NO_{X} which is stored in the exhaust purification catalyst 13 is released without being reduced. Therefore, in an embodiment according to the present invention, when the NO_{X} removal action is switched from the NO_{X} removal action by the second NO_{X} removal method to the NO_{X} removal action by the first NO_{X} removal method, if NO_{X} is stored in the exhaust purification catalyst 13, to make the stored NO_{X} be released and reduced, as shown in FIG. 16, the rich flag is set and the rich control is performed. Due to this, the air-fuel ratio (A/F)in of the exhaust gas which flows into the exhaust purification catalyst 13 is made temporarily rich.

On the other hand, SO_{X} is contained in the exhaust gas, and this SO_{X} is stored a little at a time in the exhaust purification catalyst 13. That is, the exhaust purification catalyst 13 suffers SO_{X} poisoning. In this case, the SO_{X} which is stored in the exhaust purification catalyst 13 can be made to be released from the exhaust purification catalyst 13 by making the temperature of the exhaust purification catalyst 13 rise to about 600°C and making the air-fuel ratio of the exhaust gas flowing into the exhaust purification catalyst 13 rich. Therefore, in this case as well, the rich flag is set and the rich control is performed. FIG. 17 shows the changes in the rich flag, the injection timing of the hydrocarbons WT, the changes in the air-fuel ratio (A/F)in of the exhaust gas flowing into the exhaust purification catalyst 13, and the stored NO_{X} amount ∑NOX which is stored in the exhaust purification catalyst 13 when the NO_{X} removal action by the first NO_{X} removal method is performed after such SO_{X} release control is performed. The amount of SO_{X} which is stored in the exhaust purification catalyst 13 is proportional to the fuel amount from the fuel injector 3. Therefore, in an embodiment according to the present invention, the stored SO_{X} amount ∑SOX is calculated from the fuel amount from the fuel injector 3.

As shown in FIG. 17, when SO_{X} release control is being performed, the rich flag is intermittently set. Due to this, the air-fuel ratio (A/F)in of the exhaust gas which flows into the exhaust purification catalyst 13 is intermittently made rich. On the other hand, while the rich flag is being reset, to maintain the temperature of the exhaust purification catalyst 13 at 600°C or so, for example, fuel is injected from the fuel injector 3 into the combustion chamber 2 during the exhaust stroke. SO_{X} is released from the exhaust purification catalyst 13 when the air-fuel ratio (A/F)in of the exhaust gas which flows into the exhaust purification catalyst 13 is made rich, and the amount of this released SO_{X} is calculated based on the degree of richness of the air-fuel ratio etc. The stored SO_{X} amount ∑SOX is reduced by this amount of released SO_{X}. Therefore, as shown in FIG. 17, while SO_{X} release control is being performed, the stored SO_{X} amount ∑SOX is gradually reduced.

Next, if the stored SO_{X} amount ∑SOX becomes zero, in the example which is shown in FIG. 17, SO_{X} release control is made to end and the first NOₓ removal method is started. In this case, the stored SOₓ amount ∑SOX becomes zero when the air-fuel ratio (A/F)in of the exhaust gas which flows into the exhaust purification catalyst 13 is made rich, that is, when the rich control is being performed. Therefore, the air-fuel ratio (A/F)in of the exhaust gas which flows into the exhaust purification catalyst 13 is made rich right before the first NOₓ removal method is started,.

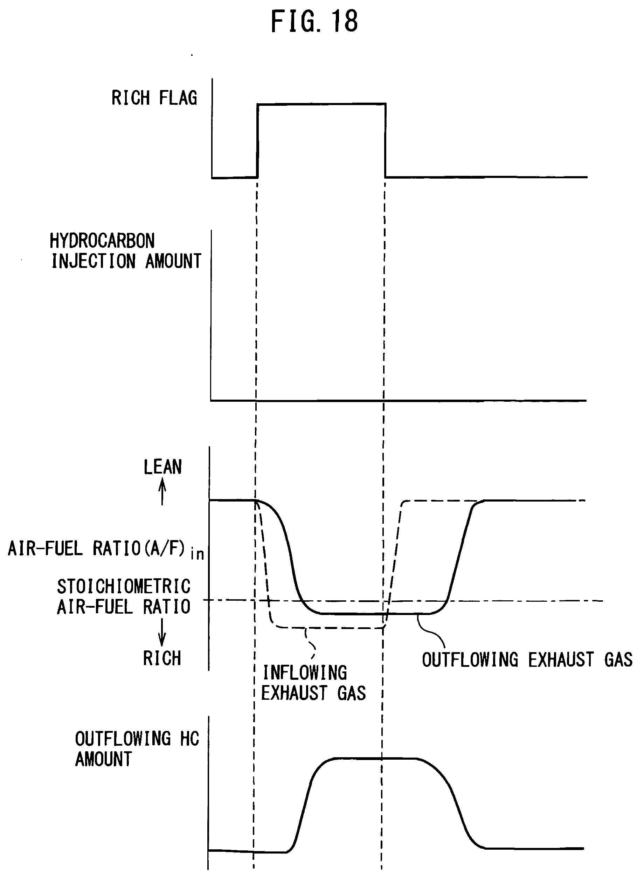

Next, while referring to FIG. 18 to FIG. 20, an injection control from the hydrocarbon feed valve 15 according to the present invention will be explained. These FIG. 18 to FIG. 20 show the changes in the rich flag, the hydrocarbon injection amount from the hydrocarbon feed valve 15, the air-fuel ratio (A/F)in of the exhaust gas, and the amount of hydrocarbons which flow out from the exhaust purification catalyst 13, that is, the amount of outflowing HC. Further, in the air-fuel ratio (A/F)in of the exhaust gas in these FIG. 18 to FIG. 20, the changes in the air-fuel ratio (A/F)in of the exhaust gas which flows into the exhaust purification catalyst 13 are shown by the broken lines, while the changes in the air-fuel ratio (A/F)in of the exhaust gas which flows out from the exhaust purification catalyst 13 are shown by the solid lines.

FIG. 18 shows the case where, as shown by A in FIG. 16, when the second NOₓ removal method is being performed, the rich flag is set for making the stored NOₓ be released from the exhaust purification catalyst 13 and reduced and thereby the rich control is performed. If the rich control is performed, as shown by the broken line in FIG. 18, the air-fuel ratio (A/F)in of the exhaust gas which flows into the exhaust purification catalyst 13 becomes rich. On the other hand, when the rich control is being performed, a large amount of reducing agent, that is, hydrocarbons, is sent into the exhaust purification catalyst 13. At this time, the majority of the hydrocarbons are used to consume the oxygen in the exhaust gas and to reduce the stored NO_{X}, but part of the hydrocarbons end up depositing on the exhaust purification catalyst 13 or slipping through the exhaust purification catalyst 13. Therefore, when the rich control is being performed, as shown by the outflowing HC amount of FIG. 18, hydrocarbons which slip through the exhaust purification catalyst 13 continue to flow out from the exhaust purification catalyst 13.

That is, when the rich control is being performed, in the exhaust gas which flows out from the exhaust purification catalyst 13, almost no oxygen exists and a considerable amount of slipped through hydrocarbons exist, so, as shown by the solid line in FIG. 18, the air-fuel ratio (A/F)in of the exhaust gas which flows out from the exhaust purification catalyst 13 becomes somewhat rich. On the other hand, even when the rich control is ended, the hydrocarbons which deposit on the exhaust purification catalyst 13 flow out from the exhaust purification catalyst 13, so, as shown in FIG. 18, for a while even when rich control is ended, the outflowing HC amount is maintained at a high value, and the air-fuel ratio (A/F)in of the exhaust gas which flows out from the exhaust purification catalyst 13 is maintained rich.

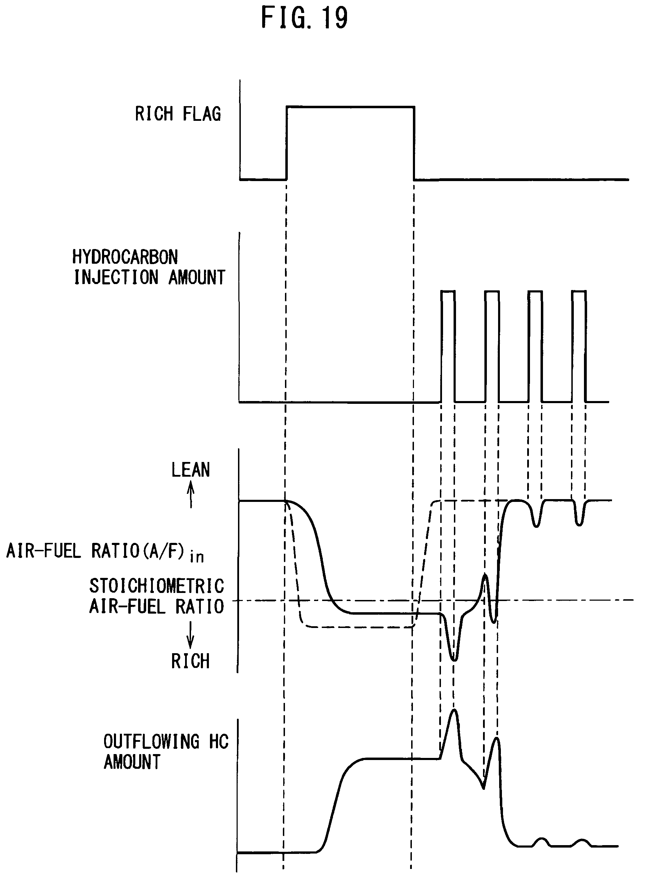

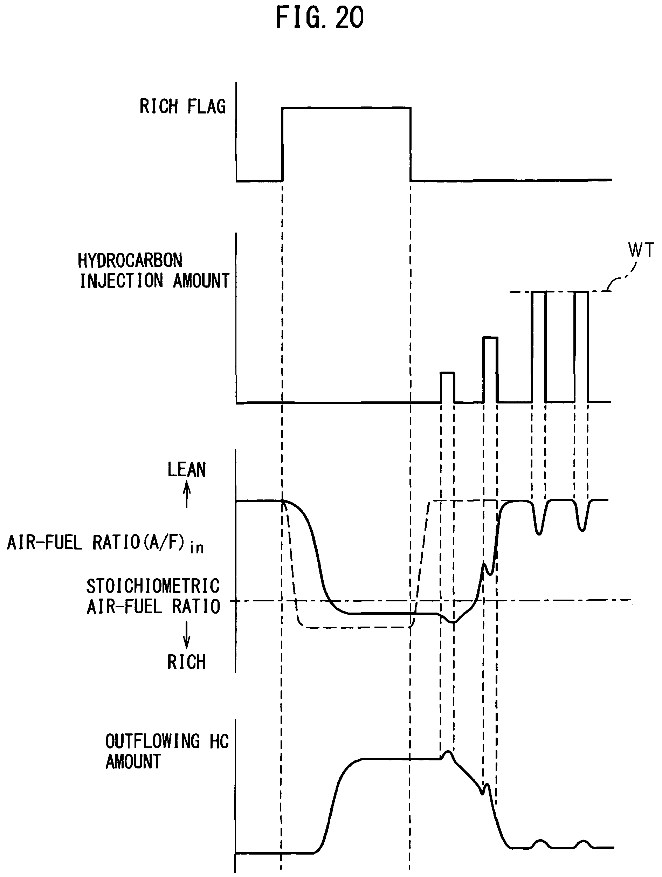

On the other hand, FIG. 19 and FIG. 20 show the case where the first NOₓ removal method is started when the rich control is ended as shown by B in FIG. 16 or where the first NOₓ removal method is started when the rich control is ended as shown by C in FIG. 17. Note that, among these figures, FIG. 19 shows the case where when the first NOₓ removal method is started, the amount of hydrocarbons which is considered usually necessary for performing the first NOₓ removal method, that is, the amount WT of hydrocarbons which is calculated from the map of FIG. 11A, is injected from the hydrocarbon feed valve 15.

As explained above, hydrocarbons flow out from the exhaust purification catalyst 13 for a while even when the rich control is ended. Accordingly, if the first NOₓ removal method is started when the rich control is ended, hydrocarbons which are injected from the hydrocarbon feed valve 15 are superposed over the hydrocarbons which continue to flow out from the exhaust purification catalyst 13. At this time, if the amount WT of hydrocarbons which is considered usually necessary for performing the first NOₓ removal method is injected from the hydrocarbon feed valve 15, as shown in FIG. 19, when hydrocarbons are injected from the hydrocarbon feed valve 15, the outflowing HC amount greatly increases and the air-fuel ratio (A/F)in of the exhaust gas which flows out from the exhaust purification catalyst 13 becomes considerably rich. As a result, a large amount of hydrocarbons ends up being exhausted from the exhaust purification catalyst 13 and white smoke is generated.

Therefore, in the present invention, as shown in FIG. 20, when the first NOₓ removal method is started after the rich control is ended, first, a smaller amount of hydrocarbons compared with the amount of hydrocarbons which is considered usually necessary for performing the first NOₓ removal method, that is, the amount WT which is calculated from the map of FIG. 11A, is injected from the hydrocarbon feed valve 15, next, the amount of injection of hydrocarbons is increased slightly, and, next, the amount of injection of hydrocarbons is further increased slightly and made the amount WT of hydrocarbons which is calculated from the map of FIG. 11A. That is, in the present invention, if the first NOₓ removal method is started when the rich control for making the air-fuel ratio (A/F)in of the exhaust gas flowing into the exhaust purification catalyst 13 rich is ended, the amount of injection of hydrocarbons from the hydrocarbon feed valve 15 is made to gradually increase.

In this way, when the rich control is ended and the first NO_{X} removal method is started, if making the amount of injection of hydrocarbons from the hydrocarbon feed valve 15 gradually increase, as shown in FIG. 20, when hydrocarbons are injected from the hydrocarbon feed valve 15, the outflowing HC amount does not change that much and the air-fuel ratio (A/F)in of the exhaust gas which flows out from the exhaust purification catalyst 13 no longer changes that much either. As a result, the exhaust purification catalyst 13 is kept from exhausting a large amount of hydrocarbons and generation of white smoke can be blocked. Note that, as explained above, in the present invention, if the first NOₓ removal method is started when the rich control for making the air-fuel ratio (A/F)in of the exhaust gas which flows into the exhaust purification catalyst 13 rich is ended, the amount of injection of hydrocarbons from the hydrocarbon feed valve 15 is made to gradually increase. In this case, in an embodiment according to the present invention, this rich control is a rich control which is performed when releasing NO_{X} from the exhaust purification catalyst 13 in case where the second NO_{X} removal method is used or a rich control which is performed when releasing SO_{X} from the exhaust purification catalyst 13.

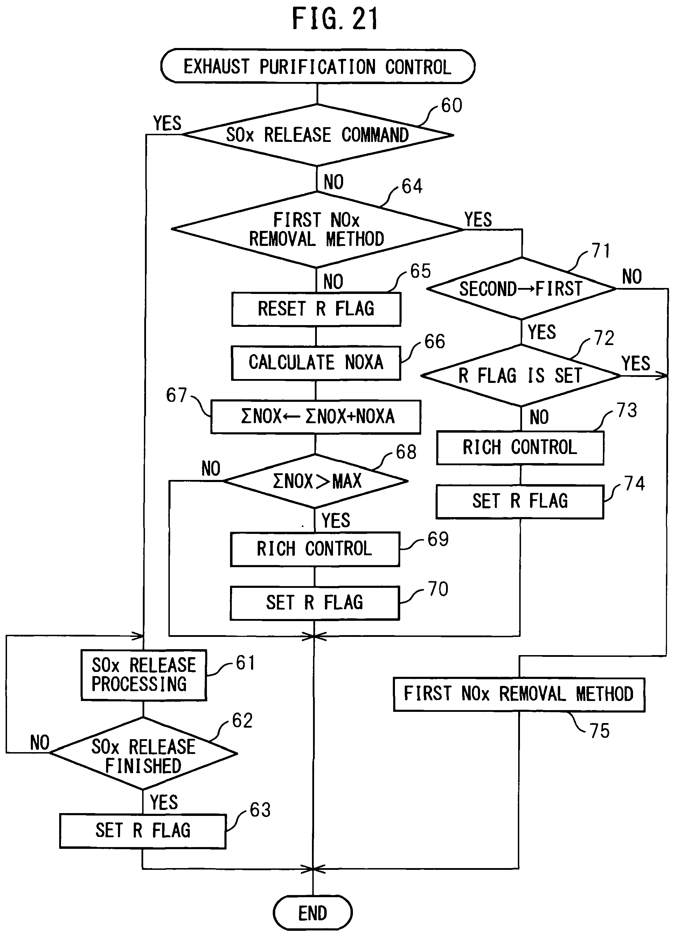

FIG. 21 shows the exhaust purification control routine. This routine is executed by interruption every predetermined time.

Referring to FIG. 21, first, at step 60, it is judged if an SO_{X} release command which indicates that SO_{X} should be released is issued. This SO_{X} release command is issued when the stored SOₓ amount ∑SOX reaches the allowable value SX. If the SO_{X} release command is issued, the routine proceeds to step 61 where the SO_{X} release control which is shown in FIG. 17 is performed. Next, at step 62, it is judged if the action for release of SO_{X} is ended, that is, if the stored SOₓ amount ∑SOX becomes zero. When the stored SOₓ amount ∑SOX becomes zero, the routine proceeds to step 63 where a R flag which shows that the rich control is now completed is set.

On the other hand, when it is judged at step 60 that the SO_{X} release command is not issued, the routine proceeds to step 64 where it is judged from the catalyst temperature of the exhaust purification catalyst 13 etc. if the first NO_{X} removal method should be performed. When it is judged that the first NO_{X} removal method should not be performed, that is, when the second NO_{X} removal method should be performed, the routine proceeds to step 65 where the R flag is reset. Next, at step 66, the NOₓ amount NOXA which is exhausted per unit time is calculated from the map which is shown in FIG. 13. Next, at step 67, the NOₓ amount NOXA which is exhausted per unit time is added to ∑NOX to thereby calculate the stored NOₓ amount ∑NOX. Next, at step 68, it is judged if the stored NOₓ amount ∑NOX exceeds the allowable value MAX. If ∑NOX>MAX, the routine proceeds to step 69 where the rich control is performed and ∑NOX is cleared. That is, the additional fuel amount WR is calculated from the map which is shown in FIG. 15 and an action of injection of additional fuel from the fuel injector 3 is performed. Next, at step 70, the R flag is set.

On the other hand, when it is judged at step 64 that the first NO_{X} removal method should be performed, the routine proceeds to step 71 where it is judged if the NOₓ removal method is now switched from the second NOX removal method to the first NOX removal method. When it is judged at step 71 that the NOₓ removal method is now switched from the second NOX removal method to the first NOX removal method, the routine proceeds to step 72 where it is judged if the R flag is set. When the NOₓ removal method is switched from the second NOX removal method to the first NOX removal method immediately after the rich control is performed at step 69, it is judged that the R flag is set. When the R flag is not set, the routine proceeds to step 73 where the rich control is performed, next, at step 74, the R flag is set.

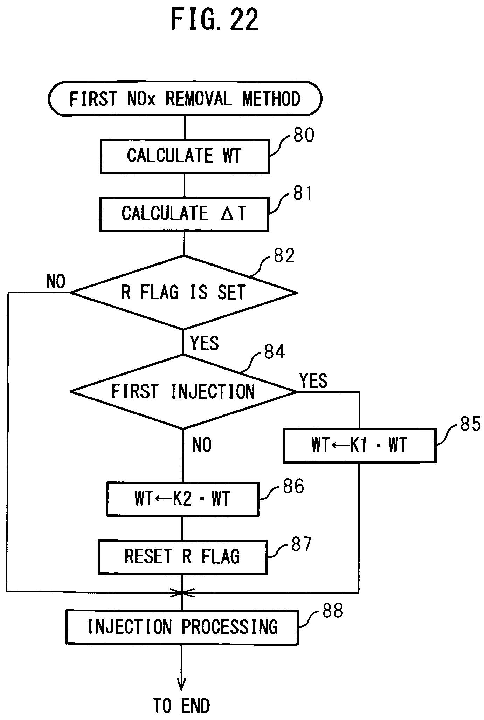

On the other hand, when it is judged at step 71 that the NOₓ removal method is not now switched from the second NOX removal method to the first NOX removal method or when it is judged at step 72 that the R flag is set, the routine proceeds to step 75 where the NO_{X} removal action by the first NO_{X} removal method is performed. The control routine of the first NO_{X} removal method which is performed at this step 75 is shown in FIG. 22.

Referring to FIG. 22, first, at step 80, the amount WT of hydrocarbons from the hydrocarbon feed valve 15 is calculated from the map which is shown in FIG. 11A. Next, at step 81, the injection period ΔT of the hydrocarbons is calculated from the map which is shown in FIG. 11B. Next, at step 82, it is judged if the R flag is set. When the R flag is not set, the routine jumps to step 88 where the amount WT of hydrocarbons which was calculated at step 80 is injected from the hydrocarbon feed valve 15 by the injection period ΔT which was calculated at step 81. As opposed to this, when it is judged at step 82 that the R flag is set, that is, when the rich control had been performed right before the first NO_{X} removal method is started, the routine proceeds to step 84.

At step 84, it is judged if the injection is the first, that is, initial, injection of hydrocarbons from the hydrocarbon feed valve 15 after the start of the first NO_{X} removal method. If the first injection of hydrocarbons from the hydrocarbon feed valve 15, the routine proceeds to step 85 where the value K1·WT obtained by multiplying the reduction coefficient K1 with the amount WT of hydrocarbons from the hydrocarbon feed valve 15 which is calculated from the map shown in FIG. 11A is made the hydrocarbon injection amount WT. Next, the routine proceeds to step 88 where the amount WT of hydrocarbons which was calculated at step 85 is injected from the hydrocarbon feed valve 15 by the injection period ΔT which was calculated at step 81. The reduction coefficient K1 is smaller than 1.0. Therefore, at this time, an amount of hydrocarbons which is smaller than the amount WT of hydrocarbons from the hydrocarbon feed valve 15 which is calculated from the map shown in FIG. 11A is injected from the hydrocarbon feed valve 15.

On the other hand, when it is judged at step 84 that the injection is not the first injection of hydrocarbons from the hydrocarbon feed valve 15 after the start of the first NO_{X} removal method, that is, when it is the second injection of hydrocarbons from the hydrocarbon feed valve 15, the routine proceeds to step 86 where the value K2·WT obtained by multiplying the reduction coefficient K2 with the amount WT of hydrocarbons from the hydrocarbon feed valve 15 which is calculated from the map shown in FIG. 11A is made the hydrocarbon injection amount WT. Next, at step 87, the R flag is reset. Next, the routine proceeds to step 88 where the amount WT of hydrocarbons which was calculated at step 86 is injected from the hydrocarbon feed valve 15 by the injection period ΔT which was calculated at step 81. The reduction coefficient K2 is smaller than 1.0 and larger than the reduction coefficient K1. Therefore, at this time, an amount of hydrocarbons which is smaller than the amount WT of hydrocarbons from the hydrocarbon feed valve 15 which is calculated from the map shown in FIG. 11A and is greater than the amount of first injection of hydrocarbons is injected from the hydrocarbon feed valve 15.

That is, if the first NO_{X} removal method is started when the rich control is ended, the amount of injection of hydrocarbons from the hydrocarbon feed valve 15 is first made the hydrocarbon injection amount K1·WT, the next hydrocarbon injection amount is made the hydrocarbon injection amount K2·WT which is greater than the initial hydrocarbon injection amount K1·WT, and the next hydrocarbon injection amount is made a hydrocarbon injection amount WT which is greater than the second hydrocarbon injection amount K2·WT. That is, as shown in FIG. 20, if the first NO_{X} removal method is started when the rich control is ended, the amount of injection of hydrocarbons from the hydrocarbon feed valve 15 is made to gradually increase. Note that, in the example which is shown in FIG. 20, at the time of the third injection, the injection amount is made to increase so as to reach the injection amount WT which is calculated from the map shown in FIG. 11A, but it is also possible to make the injection amount increase so as to reach the injection amount WT which is calculated from the map shown in FIG. 11A at the time of the fourth and later injections and possible to make the injection amount increase so as to reach the injection amount WT which is calculated from the map shown in FIG. 11A at the time of the second injection.

Note that, as another embodiment, it is also possible to arrange an oxidation catalyst for reforming hydrocarbons inside the engine exhaust passage upstream of the exhaust purification catalyst 13.

### Reference Signs List

- 4: intake manifold
- 5: exhaust manifold
- 7: exhaust turbocharger
- 12: exhaust pipe
- 13: exhaust purification catalyst
- 14: particulate filter
- 15: hydrocarbon feed valve

## Claims

1. An exhaust purification control method for an internal combustion engine (1), which comprises: an exhaust purification catalyst (13) arranged in an engine exhaust passage (12) and a hydrocarbon feed valve (15) arranged in the engine exhaust passage (12) upstream of the exhaust purification catalyst (13), wherein a precious metal catalyst (51) is carried on an exhaust gas flow surface of the exhaust purification catalyst (13) and a basicity layer (53) is formed around the precious metal catalyst (51),
the exhaust purification control method comprising:
a first NOₓ removal method which reduces NO_{X} contained in an exhaust gas by a reducing intermediate which is held on the basicity layer (53) and generated by injecting hydrocarbons from the hydrocarbon feed valve (15) within a predetermined range of period, and
a second NOₓ removal method in which an air-fuel ratio of the exhaust gas flowing into the exhaust purification catalyst (13) is made rich by a period which is longer than said predetermined range to release and reduce NOₓ stored in the exhaust purification catalyst (13) when the air-fuel ratio of the exhaust gas is lean are used,
**characterized in that**
an amount of injection of hydrocarbons from the hydrocarbon feed valve (15) is gradually increased if the first NOₓ removal method is started when a rich control for making the air-fuel ratio of the exhaust gas flowing into the exhaust purification catalyst (13) rich is ended.

2. The exhaust purification control method for an internal combustion engine (1) as claimed in claim 1, wherein said rich control is performed when releasing NOₓ from the exhaust purification catalyst (13) in case where the second NOₓ removal method is used.

3. The exhaust purification control method for an internal combustion engine (1) as claimed in claim 1, wherein said rich control is performed when releasing SOₓ from the exhaust purification catalyst (13).

## Patentansprüche

1. Abgasreinigungssteuerungsverfahren für eine Verbrennungskraftmaschine (1), die aufweist: einen Abgasreinigungskatalysators (13), der sich in einem Abgasstrang (12) der Verbrennungskraftmaschine befindet, und ein Kohlenwasserstoffzuführventil (15), das sich in dem Abgasstrang (12) der Verbrennungskraftmaschine stromaufwärts von dem Abgasreinigungskatalysator (13) befindet, wobei ein Edelmetallkatalysator (51) auf einer Abgasströmungsoberfläche des Abgasreinigungskatalysators (13) getragen ist und eine basische Schicht (53) um den Edelmetallkatalysator (51) herum ausgebildet ist,
wobei das Abgasreinigungssteuerungsverfahren aufweist:
ein erstes NO_{X}-Entfernungsverfahren, das das in einem Abgas enthaltene NO_{X} durch ein Reduktions-Zwischenprodukt, das auf der basischen Schicht (53) gehalten wird und durch ein Einspritzen von Kohlenwasserstoffen durch das Kohlenwasserstoffzuführventil (15) innerhalb eines vorgegebenen Periodenbereichs erzeugt wird, reduziert, und
ein zweites NOx-Entfernungsverfahren, bei dem ein Luft-Kraftstoff-Verhältnis des in den Abgasreinigungskatalysator (13) strömenden Abgases durch eine Periode fett gemacht wird, die länger ist als der vorgegebene Bereich, um in dem Abgasreinigungskatalysator (13) gespeichertes NO_{X} auszustoßen und zu reduzieren, wenn das Luft-Kraftstoff-Verhältnis des Abgases mager ist,
**dadurch gekennzeichnet, dass**
eine Einspritzmenge an Kohlenwasserstoffen von dem Kohlenwasserstoffzuführventil (15) schrittweise erhöht wird, falls das erste NO_{X}-Entfernungsverfahren gestartet wird, wenn eine fette Steuerung, um das Luft-Kraftstoff-Verhältnis des Abgases, das in den Abgasreinigungskatalysator (13) strömt, fett zu machen, beendet wird.

2. Abgasreinigungssteuerungsverfahren für eine Verbrennungskraftmaschine (1) nach Anspruch 1, wobei die fette Steuerung durchgeführt wird, wenn das NO_{X} aus dem Abgasreinigungskatalysator (13) in einem Fall ausgestoßen wird, in dem das zweite NO_{X}-Entfernungsverfahren verwendet wird.

3. Abgasreinigungssteuerungsverfahren für eine Verbrennungskraftmaschine (1) nach Anspruch 1, wobei die fette Steuerung durchgeführt wird, wenn SO_{X} aus dem Abgasreinigungskatalysator (13) ausgestoßen wird.

## Revendications

1. Procédé de commande de purification d'échappement pour un moteur à combustion interne (1), qui comprend : un catalyseur de purification d'échappement (13) agencé dans un passage d'échappement de moteur (12) et une vanne d'alimentation en hydrocarbures (15) agencée dans le passage d'échappement de moteur (12) en amont du catalyseur de purification d'échappement (13), dans lequel un catalyseur en métal précieux (51) est supporté sur une surface d'écoulement de gaz d'échappement du catalyseur de purification d'échappement (13) et une couche de basicité (53) est formée autour du catalyseur en métal précieux (51),
le procédé de commande de purification d'échappement comprenant l'utilisation :
d'un premier procédé de retrait de NOₓ qui réduit le NOₓ contenu dans un gaz d'échappement par un intermédiaire de réduction qui est maintenu sur la couche de basicité (53) et généré en injectant des hydrocarbures à partir de la vanne d'alimentation en hydrocarbures (15) dans les limites d'une plage de période prédéterminée, et
d'un deuxième procédé de retrait de NOₓ dans lequel un rapport air-carburant du gaz d'échappement s'écoulant dans le catalyseur de purification d'échappement (13) est rendu riche pendant une période qui est plus longue que ladite plage prédéterminée pour libérer et réduire le NOₓ stocké dans le catalyseur de purification d'échappement (13) lorsque le rapport air-carburant du gaz d'échappement est pauvre,
**caractérisé en ce que**
une quantité d'injection d'hydrocarbures à partir de la vanne d'alimentation en hydrocarbures (15) est augmentée graduellement si le premier procédé de retrait de NOₓ est débuté lorsqu'une commande riche pour rendre le rapport air-carburant du gaz d'échappement s'écoulant dans le catalyseur de purification d'échappement (13) riche est terminée.

2. Procédé de commande de purification d'échappement pour un moteur à combustion interne (1) selon la revendication 1, dans lequel ladite commande riche est effectuée lors de la libération de NOₓ à partir du catalyseur de purification d'échappement (13) dans le cas où le deuxième procédé de retrait de NOₓ est utilisé.

3. Procédé de commande de purification d'échappement pour un moteur à combustion interne (1) selon la revendication 1, dans lequel ladite commande riche est effectuée lors de la libération de SOₓ à partir du catalyseur de purification d'échappement (13).
